Europäisches Patentamt

(19) European Patent Office

Office européen des brevets

(11) Numéro de publication: **0 290 912**
B1

## (12) FASCICULE DE BREVET EUROPEEN

(45) Date de publication du fascicule du brevet:
**07.02.90**

(21) Numéro de dépôt: **88107023.9**

(22) Date de dépôt: **02.05.88**

(51) Int. Cl.⁴: **F16B 47/00**, B62J 11/00

(54) **Support en matière plastique rigide.**

(30) Priorité: **08.05.87 CH 1769/87**
**11.06.87 FR 8708168**

(43) Date de publication de la demande:
**17.11.88 Bulletin 88/46**

(45) Mention de la délivrance du brevet:
**07.02.90 Bulletin 90/6**

(84) Etats contractants désignés:
**AT BE DE ES GB IT NL SE**

(56) Documents cités:
**CH-A- 284 256**
**FR-A- 897 426**
**GB-A- 913 107**
**US-A- 2 658 246**
**US-A- 4 474 386**

(73) Titulaire: **ETA S.A., Fabriques d'Ebauches,
Schild-Rust-Strasse 17, CH-2540 Granges(CH)**

(72) Inventeur: **Zaugg, Hans, Meisenweg 3,
CH-4552 Derendingen(CH)**

(74) Mandataire: **Caron, Gérard et al, ICB Ingénieurs
Conseils en Brevets SA Passage Max. Meuron 6,
CH-2001 Neuchâtel(CH)**

## Description

La présente invention se rapporte à un support muni d'une pastille en matière plastique rigide. Cette pastille est munie de deux faces, dont l'une porte un organe d'accrochage et dont l'autre est revêtue d'une couche de matériau adhésif.

Des supports de ce type sont connus. Ils peuvent être fixés très facilement, par simple pression, sur une surface plane. Malheureusement, dès que la surface est incurvée, l'adhérence n'est plus possible.

Le but de la présente invention est de permettre la fixation d'un tel support aussi bien sur une surface plane que sur une surface incurvée.

Ce but est atteint grâce aux caractéristiques particulières que présente le support de la revendication 1.

L'invention sera mieux comprise à la lecture de la description qui va suivre, faite en référence au dessin dans lequel:

- la figure 1 représente en perspective un support selon un premier mode de réalisation de l'invention;
- la figure 2 est une vue en coupe du support de la figure 1, fixé sur un tube; et
- les figures 3 et 4 sont des vues en perspective de supports selon des deuxième et troisième modes de réalisation de l'invention.

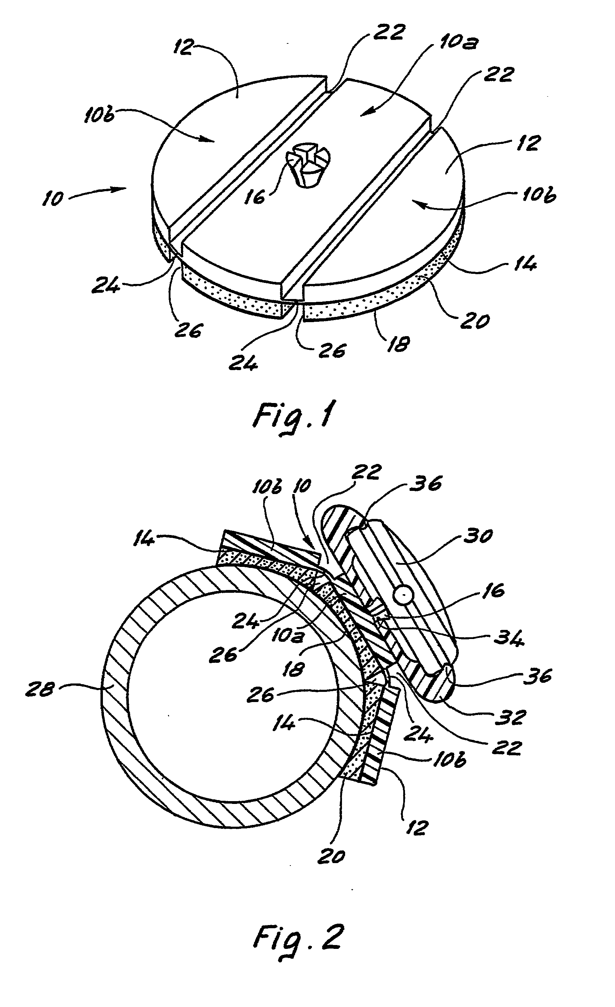

Le support représenté aux figures 1 et 2 comporte une pastille 10 en matière plastique et ayant des faces supérieure 12 et inférieure 14, un organe d'accrochage 16 solidaire de la face supérieure 12 ainsi qu'une couche de matériau adhésif 18, qui couvre la face inférieure 14, avec interposition d'une couche de matériau souple 20.

La face supérieure 12 de la pastille 10 présente en outre deux rainures 22 parallèles, situées de part et d'autre de l'organe d'accrochage 16. Ces rainures ne laissent subsister qu'un pont de matière 24 mince et souple entre la partie centrale 10a de la pastille 10 et les parties latérales 10b, formant des zones de fléchissement.

Les couches de matériau souple 20 et de matériau adhésif 18 sont avantageusement interrompues en regard des rainures 22, définissant ainsi des gorges 26 parallèles aux rainures 22.

Grâce à cette configuration particulière, le support peut être fixé sur une surface cylindrique, tel que le tube 28 représenté à la figure 2. A cause de la présence des ponts 24, les parties extérieures 10b de la pastille 10 peuvent être rabattues et entourer ainsi le tube 28. La couche de matériau souple 20 permet à la couche adhérente 18 d'épouser la forme de la surface cylindrique. De plus, les gorges 26 empêchent que les couches 18 et 20 ne forment des plis lorsque le pliage est important, ce qui pourrait nuire à l'adhérence du support.

Le rayon de courbure de la surface de fixation peut être faible, plus faible même que le rayon de la pastille 10. Il est ainsi possible de fixer un tel support sur un guidon de vélo notamment, pour y monter divers accessoires, tels qu'une montre 30 par exemple, comme on peut le voir sur la figure 2.

A cet effet, l'organe d'accrochage 16 est formé d'un plot fendu déformation radiale, venu de matière avec la pastille 10. La montre est fixée au moyen d'une pièce d'accrochage 32, munie d'un trou 34 dans lequel l'organe d'accrochage 16 s'engage à cran, et de pinces 36 enserrant la montre 30 par son boîtier.

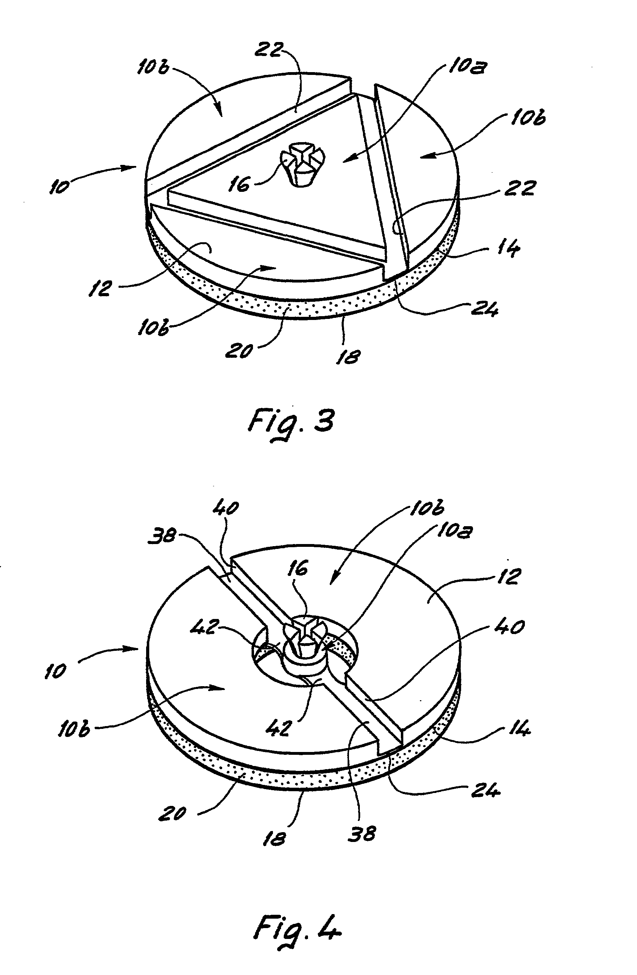

Le support représenté à la figure 3 comporte également une pastille 10 avec une face supérieure 12 et une face inférieure 14, un organe d'accrochage 16 et une couche de matériau adhésif 18 qui couvre la face inférieure 14, avec interposition d'une couche de matériau souple 20. La pastille 10 présente de même des rainures 22. Celles-ci ne sont pas parallèles, mais forment un triangle au centre duquel se trouve l'organe d'accrochage 16. La disposition de trois rainures en triangle permet l'adaptation du support sur une surface gauche, par exemple un phare, le réservoir d'une moto ou encore un vase.

Le support représenté à la figure 4 se différencie des deux modes de réalisation précédents par le fait qu'il comporte une partie centrale 10a de forme cylindrique et deux parties extérieures 10b en secteur de couronne, entourant la partie centrale 10a. Les parties extérieures 10b sont reliées l'une à l'autre par deux ponts 38 définissant ainsi deux rainures 40. Des ponts 42 relient en outre les ponts 38 à la partie centrale 10a de la pastille. Ils se trouvent dans le prolongement des ponts 38.

Un support de ce type peut être fixé sur un corps présentant une arête ou dans une encoignure.

Bien que cela ne soit pas représenté sur les figures 3 et 4, il va de soi que les supports peuvent également être munis de gorges en regard des rainures.

Des supports selon l'invention pourraient en outre être réalisés selon de nombreuses autres variantes.

Ainsi, les parties extérieures 10b de la pastille 10 pourraient avoir une épaisseur inférieure à celle de la partie 10a, sans pour autant affaiblir le support.

Le support pourrait aussi comporter un plus grand nombre de rainures. Il serait ainsi possible d'ajouter au support de la figure 3 une rainure supplémentaire, parallèle à l'une des rainures 22.

Dans les différents modes de réalisation qui ont été décrits, la pastille 10 peut avantageusement être réalisée en résine acétale, telle que le Delrin 100ST de la maison Dupont de Nemours (USA). La couche de matériau souple peut être en mousse de polyéthylène, de polyvinyl ou de polyuréthane, dont les deux faces sont revêtues de colle acrylique.

## Revendications

1. Support comportant une pastille (10) en matière plastique rigide ayant deux faces opposées (12, 14), dont une face (12) porte un organe d'accrochage (16) et dont l'autre face est revêtue d'une couche de matériau adhésif (18), caractérisé en ce que ladite pastille (10) présente au moins une rainure (22; 40) définissant une zone de fléchissement (24, 38).

2. Support selon la revendication 1, caractérisé en ce qu'une couche de matériau souple (20) est intercalée entre la couche de matériau adhésif (18) et la pastille (10).

3. Support selon la revendication 2, caractérisé en ce que les couches de matériau souple (20) et de matériau adhésif (18) sont interrompues et définissent une gorge (26) disposée en regard de la rainure (22) que présente ladite pastille (10).

4. Support selon l'une des revendications 1 à 3, caractérisé en ce qu'il comporte deux rainures parallèles (22), s'étendant de part et d'autre de l'organe d'accrochage (16).

5. Support selon l'une des revendications 1 à 3, caractérisé en ce qu'il comporte trois rainures (22) disposées en triangle, le centre du triangle étant occupé par l'organe d'accrochage (16).

6. Support selon l'une des revendications 1 à 5, caractérisé en ce que l'organe d'accrochage (16) est venu de matière avec la pastille (10).

7. Support selon l'une des revendications 1 à 6, caractérisé en ce que ladite pastille (10) est en résine acétale.

8. Ensemble destiné à être fixé sur un guidon et comportant un support selon la revendication 4, dans lequel l'organe d'accrochage (16) comporte un plot élastiquement déformable radialement, et une montre (30) dont la face inférieure est munie d'une pièce d'accrochage (32), comportant une ouverture (34) dans laquelle le plot s'engage à cran.

## Patentansprüche

1. Support, umfassend ein Plättchen (10) aus starrem Kunststoffmaterial mit zwei einander gegenüberliegenden Seiten (12, 14), deren eine Seite ein Befestigungsorgan (16) trägt und deren andere Seite mit einer Schicht aus Klebstoffmaterial (18) beschichtet ist, dadurch gekennzeichnet, daß das Plättchen (10) mindestens eine Nut (22; 40) aufweist, die eine Biegezone (24, 38) definiert.

2. Support nach Anspruch 1, dadurch gekennzeichnet, daß eine Schicht aus Weichstoff (20) zwischen der Klebstoffschicht (18) und dem Plättchen (10) eingebettet ist.

3. Support nach Anspruch 2, dadurch gekennzeichnet, daß die Weichstoffschicht (20) und das Klebstoffmaterial (18) unterbrochen sind und eine Auskehlung (26) definieren, die gegenüber der Nut (22), welche das Plättchen (10) aufweist, angeordnet ist.

4. Support nach einem der Ansprüche 1 bis 3, dadurch gekennzeichnet, daß er zwei parallele Nuten (22) aufweist, die sich beidseits des Befestigungsorgans (16) erstrecken.

5. Support nach einem der Ansprüche 1 bis 3, dadurch gekennzeichnet, daß er drei Nuten (22) aufweist, die in Dreieckform angeordnet sind, wobei das Zentrum des Dreiecks von dem Befestigungsorgan (16) eingenommen wird.

6. Support nach einem der Ansprüche 1 bis 5, dadurch gekennzeichnet, daß das Befestigungsorgan (16) einstückig mit dem Plättchen (10) hergestellt ist.

7. Support nach einem der Ansprüche 1 bis 6, dadurch gekennzeichnet, daß das Plättchen (10) aus Acetalharz besteht.

8. Baugruppe, bestimmt zur Befestigung an einer Lenkstange und einen Support nach Anspruch 4 umfassend, wobei das Befestigungsorgan (16) einen elastisch radial deformierbaren Knopf umfaßt und eine Uhr (30), deren Unterseite mit einem Verankerungsstück (32) versehen ist, umfassend eine Öffnung (34), in die der Knopf einschnappt.

## Claims

1. Support including a pellet (10) of rigid plastic material having two opposed faces (12, 14) one (12) of which bears a coupling means (16) and the other of which is covered with a layer of adhesive material (18), characterized in that said pellet (10) exhibits at least a groove (22; 40) defining a flexure zone (24, 38).

2. Support according to claim 1, characterized in that a layer of flexible material (20) is interposed between the layer of adhesive material (18) and the pellet (10).

3. Support according to claim 2, characterized in that the layers of flexible material (20) and adhesive material (18) are interrupted so as to form a slot (26) arranged facing the groove (22) exhibited by the pellet (10).

4. Support according to one of claims 1 to 3, characterized in that it includes two parallel grooves (22) extending on either side of the coupling means (16).

5. Support according to one of claims 1 to 3, characterized in that it includes three grooves (22) arranged in a triangle, the center of the triangle being occupied by the coupling means (16).

6. Support according to one of claims 1 to 5, characterized in that the coupling means (16) is formed of material from the pellet (10).

7. Support according to one of claims 1 to 6, characterized in that the pellet (10) is formed from an acetal resin.

8. Assembly intended to be fixed to a handlebar and including a support according to claim 4 in which the coupling means (16) includes a radially and elastically deformable stud and a watch (30) the lower surface of which is provided with a coupling member (32) including an opening (34) in which the stud is engaged with a snap-lock.

*Fig.1*

*Fig.2*

*Fig. 3*

*Fig. 4*